# EUROPEAN PATENT APPLICATION

(11) **EP 0 524 342 A1**
(43) Date of publication of application: **27.01.1993**
(21) Application number: 91112571.4
(22) Date of filing: 25.07.1991
(51) Int. Cl.: G01N 27/90

(54) **Transducer based on eddy current technology**

(71) Applicant: TÖRNBLOMS KVALITETSKONTROLL AB, S-725 92 Västeras (SE)
(72) Inventor: Törnblom, Bengt Hjalmar, S-725 92 Västeras (SE)
(74) Representative: Boecker, Joachim, Dr.-Ing.

(57) **Abstract**

Transducer based on eddy current technology and designed for measuring and testing of test objects (1) with respect to a quantity, for example a crack (8), of the test object. The transducer comprises a part-device (4) of electrically conducting material, for example steel, this part-device being provided with arrangements, such as grooves or slits, which render the formation of eddy currents in the part-device more difficult, thereby reducing the dampening influence of the part-device on the magnetic flux (14) extending between transducer and test object. Besides offering protection for the mechanically and thermally highly sensitive transducer coil (2), the part-device (4) may also have several other functions to fulfill.

## Description

The invention relates to a transducer based on eddy current technology according to the precharacterising part of claim 1.

The transducer is used in the area of testing and/or measuring of test objects, for example for detecting cracks in a test object.

The relevant frequency range of the magnetic fields involved is from a few Hz up to several tens of MHz.

The invention may be considered as supplementary to devices described in SE-B-7507857-6, 8302738-e, 8400861-4, 850384-1 and other, an SU-B-153 787. Similarly, DE-B-31 39 941 could advantageously be supplemented by the invention.

The term "test object" relates, for instance, to steel blanks, rods, pipes, wire, plates, sections, fluid media, etc.

The term "quantity" relates, for instance, to defects, surface cracks, shape, dimension, location, flux, velocity, etc.

When an electrically conducting material is subjected to an alternating magnetic field, eddy currents will be generated in the material. These currents strive to counteract the magnetic field, which is thus dampened. Since the eddy currents generate heat in the conducting material the material extracts energy from the magnetic field. This phenomenon is the basic problem when transducers based on eddy current technology are to be protected by simple and robust protection means of stainless steel or the like.

One problem when trying to detect, for instance, surface defects in test objects with a transducer based on eddy current technology is that the transducer must often be placed close to the surface of the test object in order to ensure sufficient sensitivity. The transducer can thus easily be damaged mechanically. The problem is aggravated if the test object is hot, for example 1000°C, since the transducer must then be cooled and the cooling arrangement must also be mechanically robust and therefore will be bulky. Thin discs/membranes of ceramic material or non-magnetic stainless steel have long been used as protection between, for instance, transducer coil and test object. The ceramic material is brittle and breaks easily, while the stainless steel dampens the magnetic field greatly at higher frequencies. In other words, neither alternative is satisfactory.

The invention aims at developing a transducer based on eddy current technology of the above-mentioned kind the sensitive parts of which are well protected against mechanical and/or thermal stress while simultaneously avoiding heavy dampening at relatively high frequencies.

To achieve this aim the invention suggests a transducer based on eddy current technology according to the introductory part of claim 1, which is characterized by the features of the characterizing part of claim 1.

Further developments of the invention are characterized by the features of the additional claims.

By way of example, the invention will now be described in greater detail with reference to the accompanying drawings, which shall only be considered as illustrating the principle of the invention without making any claim to being complete. These drawings show in
- Figure 1: a surface transducer according to the invention with a protective steel plate placed above a test object,
- Figure 2: the steel plate in Figure 1 seen from above,
- Figure 3: a surface transducer according to the invention with three ferrite poles,
- Figure 4: a similar transducer design as shown in Figure 3, with the space between the coil and the plate being filled with electrically conducting material,
- Figures 5A: a so-called through-transducer designed according to the principle of the invention,
- Figures 5B: the protective tube comprised in the transducer according to Figure 5A in a rolled out position,
- Figures 6: shows another embodiment of a surface transducer according to the invention which is additionally equipped with an electrically nonconductive ceramic plate glued to protective conductive plate.

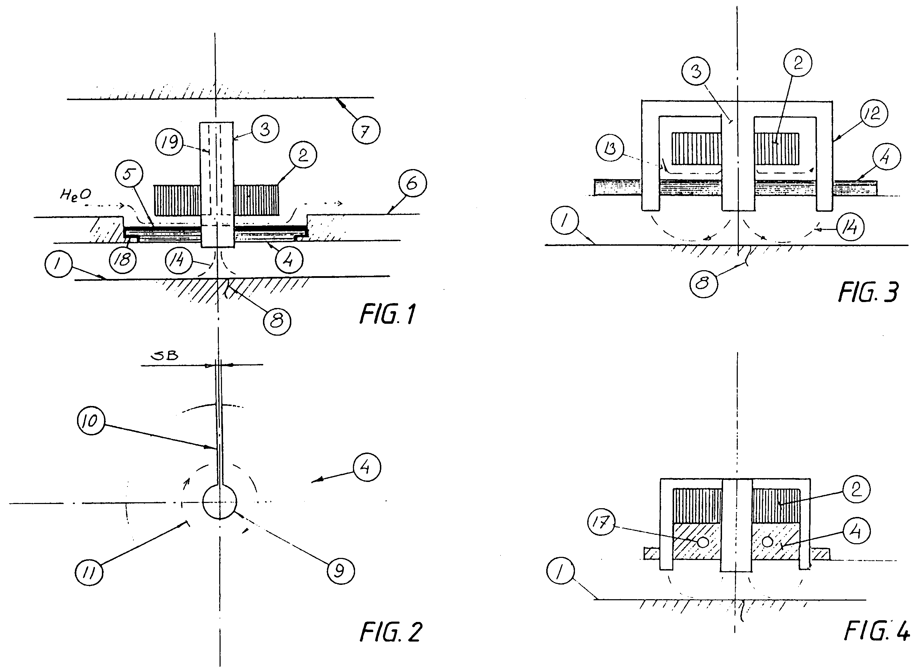

Figure 1 shows a test object 1, for example a blank, having on its surface a defect 8, for example a crack. A surface transducer coil 2 is placed inside a transducer casing 6,7. A part-device 4 is fitted as protection between the coil 2 and the surface of the test object 1. This part-device consists wholly or partially of electrically conducting material, for example stainless steel, and has the shape of a plate. If this plate were entirely homogeneous it would constitute an effective obstacle to the magnetic field which is supposed to penetrate the plate on its way from the coil to the test object and vice-versa. Thus optimal detection of the crack 8 would be prevented.

The reason for this is that the magnetic field entering the steel, induces electro-motoric forces in the steel which drive so-called eddy currents 11 in the steel plate 4. These undesired eddy currents counteract and dampen the magnetic field generated by the current through the coil 2, thus diminishing the magnetic flux penetrating into the test object 1. Due to the skin effect, the eddy currents 11 in the steel plate 4 flow primarily on the surface of the plate 4. This means that the thicker the plate the more difficult it is for the field to pass through the plate, and thus the greater will be the dampening effect on the magnetic field reaching the test object. To increase the magnetic flux driven by the magnetic field, it is usual to place a ferrite pin 3 through the coil 2. If, as shown in Figure 1, the ferrite pin 3 is permitted to protrude down through a channel 9 in the plate 4, the plate will constitute a short-circuited turn around the ferrite pole 3 conducting the magnetic flux. This causes, like a short-circuited turn on a transformer leg, a strong current flowing around the pin in the steel plate thereby strongly reinforcing the dampening effect of the eddy currents.

Figure 2 shows the plate 4 seen from above. It consists of non-magnetic stainless steel such as SIS 2333 and is 1 mm thick, for instance. It has the same mechanical strength and resistance to the environment as steel. An effective obstacle to the circular current paths 11 is obtained by providing a groove or slit 10 in the plate. The plate or part-device then no longer constitutes a short-circuited turn, and the arrangement of the groove 10 causes considerable reduction of the dampening currents in the plate 4. The magnetic flux can thus pass via the ferrite pole through the channel 9 in the plate 4, without being dampened to any great extent.

The groove 10 in Figure 2 has a width SB which may be only a fraction of a millimeter. The width is not critical and is chosen so that it can be filled with a suitable electrically insulating material 5. This material 5 may also be used to cover the plate 4 entirely if advisable.

There is nothing to prevent the part-device 4, for example the plate in Figures 1 and 2, from forming an integral part of the surrounding walls or casing 6. However, if the casing 6 is made of electrically conducting material, for example metal, the groove 10 in the plate will be bridged at its radially outer edge enabling the current 11 in the plate to flow around the groove 10 thus causing a certain amount of dampening. Admittedly the current would be greatest nearest the ferrite pole 3 if there were no groove or if there were a bridging of the groove, but dampening will also be manifest with a groove and its remote outer bridging. To circumvent this problem the plate 4 may be galvanically separated from the casing by means of an insulating layer 18, for instance, between the plate 4 and the casing 6. It is of course also important to protect the groove 10 so that no electrically conducting bridging occurs due to metal flakes or the like. Silicon film, for instance, provides suitable protection and can easily be applied on the plate. The higher the frequency, the better will be the effect of the groove.

To illustrate how effective the groove 10 is, it may be mentioned that with the plate described above and a frequency of 500 KHz, the ratio for the flux 14 between pole and test object with and without the groove 10, respectively, is about 5. In other words the groove increases the flux by a factor of 5 and this improves the measuring potential by a corresponding factor.

Several so-called carrier frequencies of the alternating current setting up the magnetic field are used to an increasing extent in modern eddy current technology. The magnetic fields of these different frequencies are dampened to a frequency-dependent varying degree by a homogeneous plate (without a groove). But if the plate is provided with a groove or the like which prevents or renders more difficult the formation of current paths, the magnetic fields of the various frequencies will be dampened to a much less varying extent. This means that the present invention facilitates the use of so-called multi-frequency principles.

When working with currents of several carrier frequencies and using a homogeneous metal plate 4, the magnetic fields of higher frequencies produced by the currents have been strongly dampened in relation to those of lower frequencies. This has rendered more difficult so-called lift-off suppression and vector transformation based on high frequencies also being used. This is in all probability the major reason for rolled wire testing, where nothing other than metal tube protection is effective, still being carried out using primitive differential measurement with one frequency.

In all its simplicity, the invention can here open the door to rolled wire testing using more than one frequency.

Figure 1 also shows how coolant, for example water (H₂O), is allowed to pass between the coil 2 and plate 4. The plate also acts as a guide for the water flow. The protective device/plate may thus fulfill several functions and the number of grooves or other arrangements impeding the formation of eddy currents paths in the plate may be varied in many ways. The plate may of course consist of several parts. The plate may be manufactured of stainless steel which has relatively poor electrical conductivity, but even ordinary steel may be used since its magnetic permeability increases the skin effect and thus renders more difficult the flow of eddy currents. The plate may also be laminated but the simplicity of the device is then lost to a certain extent, as is also its heat-resistance.

Figure 3 shows an example of how the ferrite pole 3 can be supplemented by additional ferrite poles 12, so that the flux is directed, bundled and strengthened as well as being able to pass easily through the plate 4.

The same figure shows that, besides the useful flux 14, a leakage flux 13 of no use flows between coil 2 and plate 4. This leakage flow decreases somewhat thanks to the groove 10. It can be further reduced by filling the space below the coil with electrically conducting material as shown in Figure 4, for example by making the plate 4 thicker. This thicker plate or the like may also be provided with arrangements to reduce the formation of dampening currents. Efficient cooling, for example with water, can also be obtained if the filler material is provided with channels 17 as shown in Figure 4. Besides hindering the formation of leakage flux 13, the magnetic flux is conducted and/or directed down towards the surface of the test object 1, which is of course a great advantage from the point of view of measuring. At the same time the sensitive coil 2 can be distanced from the test object and located in a more protected position, while the plate 4 also acts as a robust and strong mechanical protection. The coil 2 is suitably wound of copper foil, for example 3 mm wide and 0.1 mm thick, and provided with plastic film as insulation between the layers. The effective copper area will then be large while the skin effect will less affect the copper of the coil.

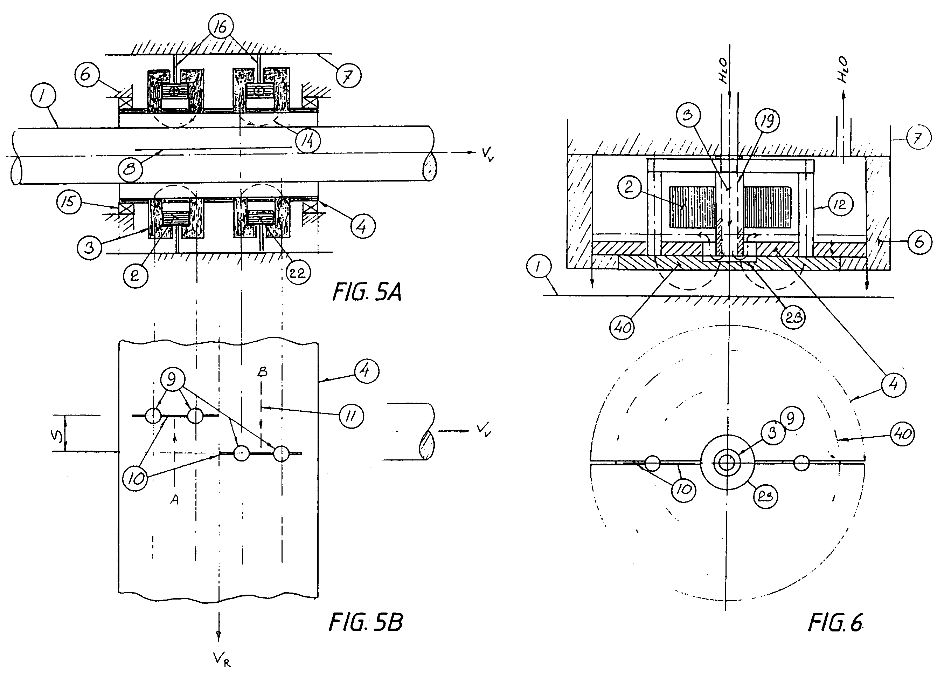

Figures 1 to 4 show surface transducers. Figures 5A and 5B show how the present invention may be used, for example, in so called through-transducers 2, 22. The test object 1 is in this case a circular rod moving at a speed V_{V} through the differential-connected coils 2 and 22. These coils are partially surrounded by the ferrite yoke 3 which protrudes into cavities/channels in the tube-shaped protective part-device 4. The coils 2, 22 are fixed to the stand/casing 7 via attachment means 16. However, the bearings 15 allows the ferrite yoke 3 and tube 4 to rotate. The circular speed of rotation of the tube is V_{R}.

If the tube is imagined as cut and rolled out as shown in Figure 5B, the holes 9 into which the ferrite poles 9 protrude are visible, as well as the grooves 10 reducing the formation of eddy currents in the tube. Also to be seen are the directions of the eddy current paths A and B which would have been formed if the grooves had not been there.

If the tube and ferrite yoke are rotated by some suitable drive means, a long axial surface crack 8, for instance, will be passed by respective ferrite yokes and their field picture once per revolution as long as the crack remains within the coils. If, thus, the ferrite poles are somewhat displaced, as indicated by S, in relation to each other, the flux passage across the crack will occur with a slight time displacement in relation to each coil 2 and 22. Due to the differential coil connection, therefore, a signal will be generated which can be utilized to detect the crack 8.

The variation possibilities are considerable, including ferrite yoke, coil arrangement, placing, etc.

In Figure 5A the coil 2 is fixed whereas the relatively tightly fitting ferrite yokes 3 may be made to rotate. To enable such an arrangement to be assembled, it must be possible to split the ferrite yokes or manufacture them in segments or the like.

Figure 5 may also be looked upon as an example of how a conventional differential transducer, comprising the two opposing through-coils 2 and 22, can be supplemented by rotating ferrite yokes 3. This enables the differential coil arrangement to detect "long defects" such as long axial cracks or the like, as well as "short defects". This could not be done efficiently without the slits 10, especially not at higher carrier frequencies. Shallower cracks require higher frequencies and consequently a more accentuated skin effect.

In other word, the coil arrangement in Figure 5 can also function as a conventional differential transducer for short defects, but be supplemented by the present invention so that long defects can also be detected via the differential coil arrangement.

The number of U-shaped ferrite yokes, for instance, can be varied depending on the quantity to be detected.

In eddy-current testing the transducer must often move rapidly over the surface of the test object to ensure that the surface scan pattern is sufficiently dense and finely meshed. SE-B-8503894-1 describes a method of rotating an eddy-current transducer rapidly by means of a "top". If a ceramic plate is used as protection here, the cooling water will explode the plate due to the great centrifugal force occurring as a result of the high revolution rate, often several thousand rpm. If a steel plate according to the invention, for instance, is used instead of the ceramic plate the risk of explosion is eliminated.

By way of example Figure 6 shows another embodiment with a surface transducer 2 including a ferrite yoke, fitted in a casing 6. The protective plate 4 is glued to a ceramic plate 40 which is not electrically conducting. The plate 4 consists of two parts which are thus held together by the ceramic plate 40. At the same time the ceramic plate seals the groove 10 and protects the lower end of the ferrite pole 3. A recess is provided in the ceramic plate 40, permitting water flowing via the hollow 19 in the ferrite pole 3 to pass and cool the ferrite pole 3 and coil 2.

The ceramic plate 40 in combination with the stainless plate 4 provides excellent protection in several respects, both mechanically and electrically.

The invention can be summarized simply in the following manner:
A device, for example a measuring head, based on the use of eddy current technology, comprising a part-device 4 of electrically conducting material, for example steel, including a channel, for example a hole or the like, this channel in turn containing material with good magnetic-flux conducting properties, for example ferrite (uᵣₑₗ>1). A part of the part-device, subjected to or surrounding the magnetic flux, is provided with arrangements, for example grooves/slits 10 which impede or completely prevent the formation of dampening currents in the part-device connected to the transducer/sensor 2.

The invention can be varied in many ways within the scope of the following claims.

## Claims

1. Transducer based on eddy current technology and designed for measuring and testing of test objects with respect to a quantity, for example a crack, of the test object, which transducer comprises at least one member (2,22) for generating and/or sensing magnetic flux (14), at least one flux-influencing first part-device (3,12) pertaining to said flux-generating member (2,22) and made of a material having high magnetic permeability, and a second part-device (4) located between the flux-generating member (2,22) and the test object (1) to protect the flux-generating member (2,22) against mechanical and/or thermals stress, said second part-device (4) containing electrically conducting material **characterized** in that the second part-device (4) is provided with at least one channel (9) through which a part of the first part-device (3,12) passes and that the second part-device (4) is provided with arrangements (10) which render more difficult the formation of flux-dampening currents (11) in the second part-device (4).

2. Transducer according to claim 1, **characterized** in that the flux-generating member (2,22) is arranged to generate and/or sense magnetic flux (14) of different or varying frequencies.

3. Transducer according to claim 1 or 2, **characterized** in that the first part-device (3,12) is made of ferrite.

4. Transducer according to any of the preceding claims, **characterized** in that the second part-device (4) is a part of the casing (6) of the flux-generating member (2,22).

5. Transducer according to any of the preceding claims, **characterized** in that the second part-device (4) is shaped as a plate (4).

6. Transducer according to any of the preceding claims, **characterized** in that said arrangement (10) consists of a continuous groove (10) between said channels (9) and the periphery of the second part-device (4).

7. Transducer according to any of claims 1 to 4, **characterized** in that the second part-device (4) is shaped as a tube (4).

8. Transducer according to claim 7, **characterized** in that the test object (1) passes through the tube (4).

9. Transducer according to claim 7 or 8, **characterized** in that the tube (4) is arranged to be movable in a bearing (15) in at least one direction of rotation (V_{R}) in relation to the flux-generating member (2,22) and/or the test object (1).

10. Transducer according to any of claims 7-9, **characterized** in that the tube (4) is provided with channels (9) arranged with a certain displacement (S) in relation to each other, preferably in the direction of rotation (V_{R}) of the tube (4).

11. Transducer according to any of the preceding claims, **characterized** in that the first part-device (3,12) consists of at least two parts and/or can be split into parts.

12. Transducer according to any of the preceding claims, **characterized** in that the second part-device (4) is wholly or partially cooled by a flow of water between the flux-generating member (2,22) and the second part-device (4).

13. Transducer according to any of the preceding claims, **characterized** in that the second part-device (4) is wholly or partially covered with an insulating and/or protective material.
